# EUROPEAN PATENT SPECIFICATION

(11) **EP 3 924 648 B1**
(45) Date of publication and mention of the grant of the patent: **02.10.2024**
(21) Application number: 20706413.0
(22) Date of filing: 12.02.2020
(51) Int. Cl.: F16H 63/34, B60T 1/00, F16D 63/00

(54) **PARK LOCK MECHANISM**
PARKSPERRENMECHANISMUS
MÉCANISME DE VERROUILLAGE DE STATIONNEMENT

(30) Priority: 12.02.2019 BE 201905088
(43) Date of publication of application: 22.12.2021
(73) Proprietor: Punch Powertrain E-Vehicles NV, 3800 Sint-Truiden (BE)
(72) Inventor: VAN DER VECHT, Jan Willem, 3800 Sint-Truiden (BE); GROTJAHN, Christoph Lars, 3800 Sint-Truiden (BE)
(74) Representative: V.O.
(86) International application number: PCT/EP2020/053635
(87) International publication number: WO 2020/165273

(56) References cited:
- DE-A1- 10 143 386
- DE-A1- 102011 016 584
- JP-A- S63 297 152
- KR-A- 20100 026 788

## Description

### TECHNICAL FIELD

The present invention relates to the field of park lock mechanisms.

### BACKGROUND

Electric vehicles may be provided with a park lock connected indirectly to the wheels of the electric vehicle via a transmission or drive unit to prevent rolling of the vehicle when the park lock mechanism is engaged, for example when the vehicle is parked on a slope.

The park lock may be engaged when the wheels of the vehicle are still turning. When the park lock is then engaged, the wheels of the vehicle connected to the drivetrain are locked and may slip on the road surface on which the wheels were rolling. The friction force between the wheels and the road surface causes the vehicle to come to a standstill and causes a load on the park lock mechanism.

In many electric vehicles, no clutch is present to disconnect the electric motor from the wheels. As a result, the rotor of the electric motor will stop as well when the park lock is engaged, which may cause a sudden and intense deceleration of the rotor if the park lock is engaged during vehicle movement. This deceleration causes high loads on the park lock system which may cause damage to the park lock system and/or other components of the drive unit. The shock load from the deceleration of the rotor shaft might exceed the load caused by the friction between the wheels and the road surface. To prevent the shock load, a system may be provided which prevents engagement of the park lock whilst the vehicle is still moving.

### SUMMARY

To prevent damage to the park lock system due to high loads caused by deceleration of the rotor shaft, components of the park lock system and/or other components of the drive unit such as a pawl, cone, park lock wheel, bearings, shafts and housing are often oversized. It is preferred to provide an improved park lock system with a reduced size.

The reduction in size may be achieved by providing a resilient member within the park lock system or in the transmission. The resilient member is arranged for decreasing deceleration forces when engaging the park lock. With these decreased forces, and because the shock load from the deceleration of the rotor shaft may exceed the load caused by the friction between the wheels and the road surface, smaller components such as smaller bearings may be chosen in the design of a gear train of an electric vehicle.

A first aspect provides a park lock system for an electric vehicle, comprising a first rotational member arranged to be, preferably rigidly, rotationally connected to a rotor shaft of an electric motor of the electric vehicle, a second rotational member, a park lock mechanism arranged to substantially prevent, in an engaged setting, a rotation of the second rotational member and allow, in a disengaged setting, a rotation of the second rotational member, and a resilient member rotationally connecting the first rotational member and the second rotational member.

A rotational member may be any object arranged to be rotated, such as a gear, cog, sprocket, axle, pinion, shaft, ratchet wheel, pulley, sheave, any other object, or a member comprising any combination of said objects. For example may the first rotational member be the rotor of part thereof, and may the second rotational member be a park lock wheel.

A rotational member may rotate at a certain rotational speed, which may be expressed in e.g. rad/s (radians/sec), deg/s (degrees/sec) or RPM (Revolutions Per Minute). The rotation may be around a single rotational axis, which is often an axis of rotational symmetry of the rotational member. A moment of inertia of a rotational member defines the torque required for a certain angular acceleration around the rotational axis, and may be expressed in kg·m². The rotational energy of a rotational member is the kinetic energy due to rotation of the rotational member, and may be expressed in Joules.

Rotational stiffness is defined as the amount of torque required to internally twist a body for a certain amount of degrees. The rotational stiffness may be expressed in Nm/deg. A low rotational stiffness implies that it is easier, i.e. a low amount of torque is required, to internally twist a body; a high rotational stiffness implies that it is harder, i.e. a high amount of torque is required, to internally twist a body. A person skilled in the art will appreciate how to influence rotational stiffness of a body, for example by manipulating the shape of the body or by choosing a particular material with a particular G-modulus for the body.

Translational stiffness is defined as the amount of force required to deform a body, and may be expressed in N/mm. A translational stiffness, also referred to just as stiffness, of an object may be influenced for example by its dimensions and by choosing a particular material with a particular E modulus for the object.

An object being resilient means that when a certain force or torque is applied to the object, at least part of the object will elastically deform. When the force or torque is released from the resilient object, the resilient object will substantially return to the original shape it held before the force or torque was applied to it. During elastic deformation under influence of a torque, e.g. twisting, rotational energy may be converted to elastic energy stored in the deformation of the material comprised by the object. For some materials, the rotational energy may be at least partially converted to thermal energy, which may dissipate into the environment surrounding the object.

The gear train of an electric vehicle may comprise a transmission, one or more drive shafts, one or more differentials, and a final drive. The gear train is rotationally connectable to a power source, such as an electric motor.

A first object and a second object being rotationally connected means that rotational energy may be transferred between the first object and the second object. Examples of two objects that are rotationally connected are two parts of a shaft which are fixed in line with each other and two gears which are provided substantially co-axially with meshing teeth.

When a park lock system according to the first aspect is engaged while the vehicle is moving, and thus while the rotor shaft is rotating, rotation of the second rotational member is locked by the park lock mechanism in the engaged setting. The first rotational member is still rotating at the time of engagement between the park lock mechanism and the second rotational member, causing a difference in rotational speed between the first rotational member and the second rotational member.

This difference in rotational speed results in two effects: a deceleration of the first rotational member and a deformation of the resilient member. Since rotational energy of the rotor shaft, which is rotationally connected to the first rotational member, is at least partially used for deformation of the resilient member, the deceleration of the first rotational member and thus the deceleration of the rotor shaft will be lower compared to a situation with a substantially non-resilient member rotationally connecting the first rotational member and the second rotational member. The reduction of deceleration of the rotor shaft will in turn result in a lower dynamic load on the park lock system by virtue of the resilient member provided somewhere between the rotor and the park lock system.

The park lock system may comprise a shaft, wherein the first rotational member is connected at a first axial position on the shaft and the second rotational member is connected at a second axial position on the shaft.

The shaft may comprise the resilient member, or be the resilient member. A torsional resilience may be provided by the shaft between the first rotational member and the second rotational member due to the axial distance between the first rotational member and the second rotational member. The axial distance may be increased or decreased dependent on the desired rotational stiffness of the shaft as the resilient member or the shaft comprising the resilient member.

In an embodiment of the park lock system, the second rotational member is rotationally connected to the shaft via the resilient member. As such, rotational energy passing between the second rotational member and the first rotational member has to travel through the resilient member and may thus deform the resilient member.

For achieving the desired stiffness of the resilient member, the resilient member may comprise vulcanized rubber, any other resilient material, or any combination thereof.

A first of the resilient member and the second rotational member comprises a plurality of axial protrusions and a second of the resilient member and the second rotational member comprises a plurality of axial indentations arranged to receive the axial protrusions. As such, the resilient member may be rotationally connected to the second rotational member.

In a further embodiment, the resilient member comprises a plurality of compression springs provided substantially tangentially relative to the second rotational member. As such, the resilient member may rotationally connect the first rotational member and the second rotational member, wherein rotational energy transferring between the first rotational member and the second rotational member passes through the plurality of compression springs as the resilient member.

In an even further embodiment of the park lock system, the resilient member is arranged as a plurality of leaf springs provided substantially radially relative to the second rotational member. As such, the resilient member may rotationally connect the first rotational member and the second rotational member, wherein rotational energy transferring between the first rotational member and the second rotational member passes through the plurality of leaf springs as the resilient member.

When the resilient member is arranged to rotationally connect the first rotational member and the second rotational member, the resilient member may have a torsional stiffness between 20 Nm/deg and 600 Nm/deg, preferably between 50 Nm/deg and 400 Nm/deg, more preferably between 75 Nm/deg and 300 Nm/deg, and even more preferably between 100 Nm/deg and 250 Nm/deg.

The preferred rotational stiffness of the resilient member may depend on for example the vehicle mass, the maximum vehicle speed at which the park lock system may be engaged, the rotor inertia, any other mass or moment of inertia comprised by the vehicle, any gear ratio between the rotor and the resilient member, any other factor, or any combination thereof.

A second aspect provides a further embodiment of a park lock system sharing the preference to provide an improved park lock system with a reduced size, using a resilient member.

As such, an embodiment of the park lock system according to the second aspect comprises: a first rotational member arranged to be rotationally connected to a rotor shaft of an electric motor of the electric vehicle, a second rotational member rotationally connected to the first rotational member and arranged to be connected to a park lock mechanism, a park lock mechanism arranged to substantially prevent, in an engaged setting, a rotation of the second rotational member and allow, in a disengaged setting, a rotation of the second rotational member, and a resilient member arranged to in the engaged setting couple a force between the second rotational member and a transmission housing.

As with the park lock system according to the first aspect, the park lock system according to the second aspect makes use of a resilient member arranged to reduce deceleration of the first rotational member when the park lock system is engaged while the vehicle is moving.

A third aspect provides a transmission for an electric vehicle, comprising a transmission housing fixable to a frame of the electric vehicle, the park lock system according to the first aspect or according to the second aspect, wherein in the engaged setting of the park lock mechanism rotation of the second rotational member is coupled to the housing via the park lock mechanism and in the disengaged setting the second rotational member and the park lock mechanism are not rotationally connected such that the second rotational member may be rotated relative to the housing.

In an embodiment of the transmission, the second rotational member is arranged as a gear wheel, and the park lock mechanism comprises an engagement member movable between an engaged position and a disengaged position corresponding to the engaged setting and the disengaged setting, wherein in the engaged position the engagement member engages the gear wheel, and in the disengaged position the engagement member does not engage the gear wheel.

A fourth aspect provides a powertrain of an electric vehicle, comprising a transmission according to the third aspect, and an electric motor comprising a rotor comprising a rotor shaft, wherein the rotor shaft is rotationally connected to the first rotational member of the park lock system of the transmission such that rotation of the rotor is connected to the housing of the transmission via the resilient member when the park lock mechanism is in the engaged setting.

A fifth aspect provides an electric vehicle, comprising a powertrain according to the fourth aspect.

### BRIEF DESCRIPTION OF THE FIGURES

The various aspects and embodiments thereof will now be discussed in conjunction with figures. In the figures:
Fig. 1A: shows a schematic view of an electric vehicle;
Fig. 1B: shows a schematic overview of the inertias in a drive line;
Fig. 2A: shows part of an embodiment of a transmission;
Fig. 2B: shows part of another embodiment of the transmission;
Fig. 3A: shows part of yet another embodiment of the transmission;
Fig. 3B: shows part of a further embodiment of the transmission with a park lock system according to the second aspect;
Fig. 4A: shows part of an even further embodiment of the transmission;
Fig. 4B: shows part of yet another embodiment of the transmission;
Fig. 5A: shows a section view of yet another embodiment of the transmission;
Fig. 5B: shows a front view of the embodiment of the transmission of Fig. 5A;
Fig. 6A: shows a section view of a further embodiment of the transmission; and
Fig. 6B: shows a front view of the embodiment of the transmission of Fig. 6A;
Fig. 7A: shows an isometric grid of a park lock in engaged braking position;
Fig. 7B: shows an isometric grid of a park lock in disengaged position;
Fig. 8A: shows an isometric grid of another park lock in engaged braking position; and
Fig. 8B: shows an isometric grid of another park lock in disengaged position.

### DETAILED DESCRIPTION

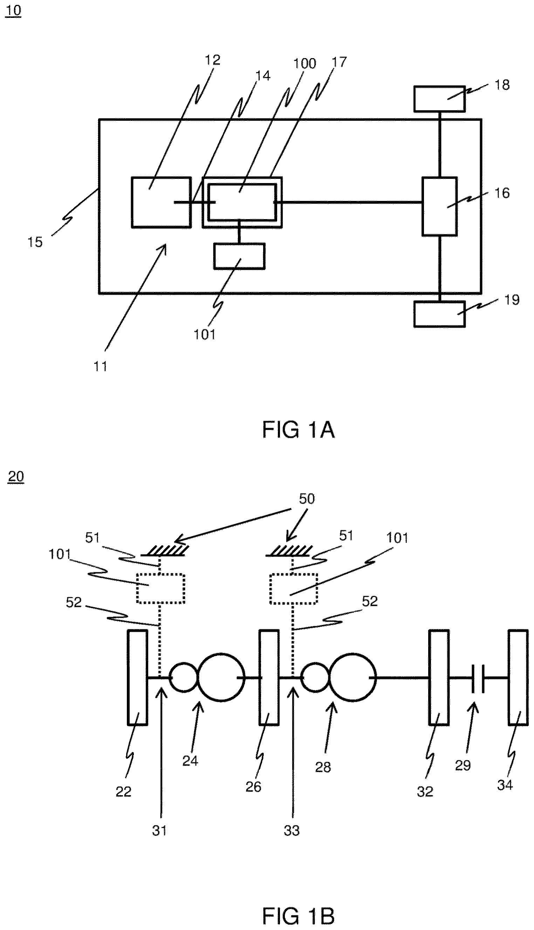

Fig. 1A shows a schematic view of an electric vehicle 10, comprising a vehicle chasses 15, comprising a powertrain 11 comprising an electric motor 12 with a rotor 14 connected to a transmission 100 comprising a transmission housing 17. The transmission 100 is connected via an optional differential 16 to a first wheel 18 and a second wheel 19. Note that in the embodiment of the vehicle 10 as shown in Fig. 1A, the rotor 14 is always rotationally connected to the wheels 18,19 as there is no clutch or other decoupling element provided between the wheels 18,19 and the rotor. The electric vehicle 10 may comprise four wheels, all four of which may be connected to the motor 12 and may thus be driven by the motor 12.

The electric vehicle 10 comprises a park lock system 101 which may be provided in the transmission housing 17 or at least partially outside the transmission housing 17. The park lock system 101 is arranged to prevent rolling of the vehicle when a park lock mechanism comprised by the park lock system 101 is engaged, for example when the vehicle 10 is parked on a slope.

Fig. 1B shows a schematic overview of the inertias in a driveline 20 of the electric vehicle 10, wherein a rotor inertia 22 is connected to a first gear ratio 24, which in turn may be connected to an intermediate shaft inertia 26, which may be connected to a second gear ratio 28. Any number of intermediate shafts and gear ratios may be provided, including no intermediate shafts and no gear ratios at all. The second gear ratio 28 is connected to an after gear inertia 32, which may comprise any of an inertia of a differential, wheel rims and tires, or any other inertia connected in the driveline 20. Finally, via a frictional contact 29 between the tires and the road, a vehicle inertia 34 is connected to the rotor inertia 22.

Fig. 1B shows as dotted lines two park lock systems 101 at optional locations, a first optional location 31 being between the rotor inertia 22 and the first gear ratio 24 and a second optional location 33 being between the intermediate shaft inertia 26 and the second gear ratio 28. The park lock system 101 is via a first connection 51 connected to a fixed world 50, for example the transmission housing 17 or any other rigid component of the vehicle 10 such as the chassis 15. The fixed world 50 may be assumed to have a substantially infinite stiffness. The park lock system 101 may be in an engaged setting connected to the driveline 20 via a second connection 52, and in a disengaged setting not connected to the driveline 20.

More locations for the park lock system 101 are envisioned as well, for example between the first gear ratio 24 and the intermediate shaft inertia 26, between the second gear ratio 28 and the after gear inertia 32, between any two components comprised by the after gear inertia 32, or any other location where the park lock system 101 may in the engaged setting be coupled to the rotor inertia 22. The location may for example be chosen based on a dynamic model of the inertias in the drive line 20.

The resilient member for reducing a deceleration of the rotor inertia 22 may be provided in the first connection 51, in the second connection 52, or in both connections.

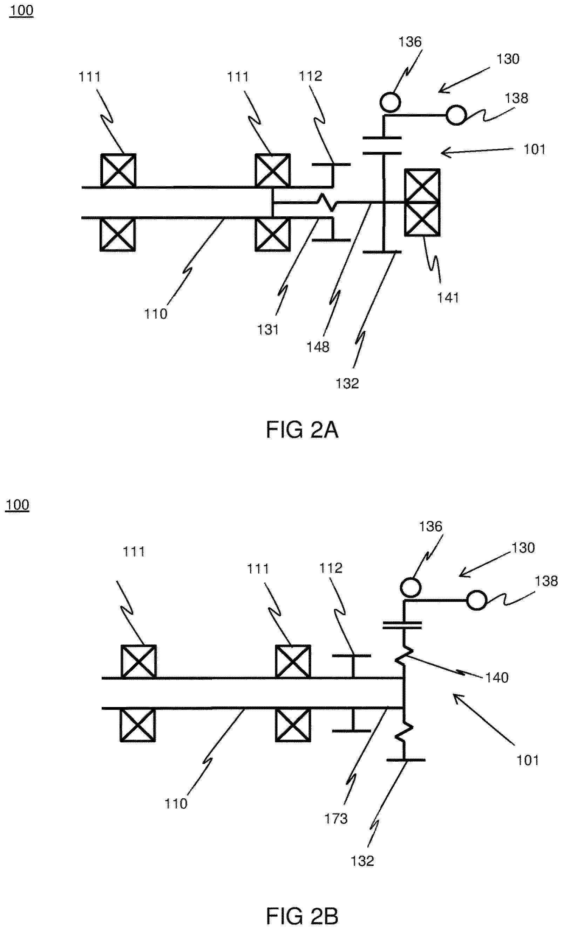

Fig. 2A shows part of an embodiment of a transmission 100, comprising a rotor shaft 110 which in this embodiment is an at least partially hollow rotor shaft 110. The rotor shaft 110 is rotationally supported by two rotor bearings 111. The rotor bearings 111 are connected to the transmission 100 such that the rotor shaft 110 may rotate relative to the transmission 100. The rotor shaft 110 may be provided with a rotor gear 112 which is arranged to be rotationally connected to a further component of the transmission 100, such as an intermediate shaft or a differential.

The transmission 100 further comprises an embodiment of a park lock system 101 according to the first aspect, comprising a part 131 of the rotor shaft 110 as a first rotational member, and a park lock wheel 132 as a second rotational member. The rotor shaft 110 is rotationally connected to the park lock wheel 132 through a resilient shaft 148 as a resilient member. The resilient shaft 148 is in this embodiment rotationally supported by a resilient shaft bearing 141 and is at least partially provided inside the hollow rotor shaft 110.

The part 131 of the rotor shaft 110 as the first rotational member is connected to the shaft 148 at a first axial position at an axial distance from a second axial position where the park lock wheel 132 as the second rotational member is connected to the shaft 148.

The park lock system 101 further comprises a park lock mechanism 130 comprising a park lock actuator 136 for engaging and disengaging the park lock mechanism 130 and the park lock wheel 132 and a housing connection 138 rigidly connecting the park lock mechanism 130 to the transmission housing or any other component of an electric vehicle 10 to which the park lock mechanism 130 may be substantially rigidly connected.

Fig. 2B shows part of another embodiment of the transmission 100, wherein an embodiment of the park lock system 101 according to the first aspect comprises an extended section 173 as a first rotational member, which may be a separate part rotationally connected to the rotor shaft 110 or may be part of the rotor shaft 110 itself.

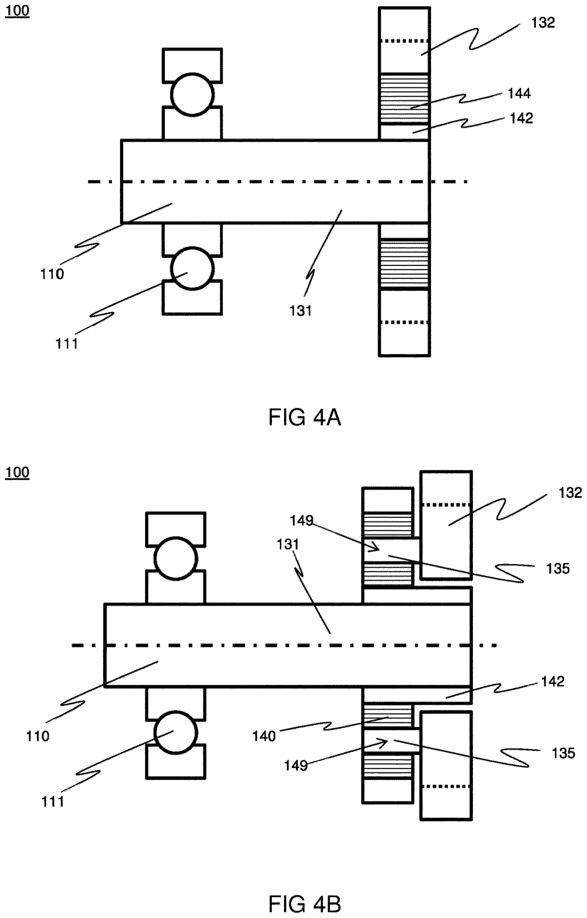

The park lock wheel 132 is provided as the second rotational member, and the park lock wheel 132 is connected to the extended section 173 via the resilient member 140. Different embodiments are envisioned for the resilient member 140 which may be applied in the park lock mechanism 101 of Fig. 2B, some of which will be explained in conjunction with Figs. 4A, 4B, 5A, 5B, 6A, 6B, 7A, and 8A.

As an alternative to the embodiment of Fig. 2B, the extended section 173 may be omitted and the park lock wheel 132 may be connected via the resilient member 140 to the rotor shaft 110, for example between the right rotor bearing 111 and the rotor gear 112.

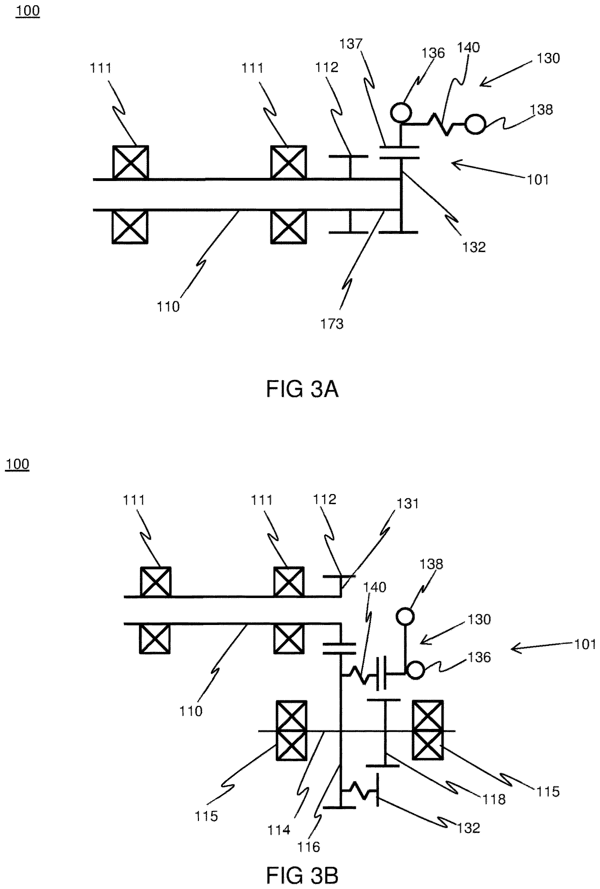

Fig. 3A shows part of a further embodiment of the transmission 100, comprising a park lock system 101 according to the second aspect comprising the extended section 173 as a first rotational member, which may be a separate part rotationally connected to the rotor shaft 110 or may be part of the rotor shaft 110 itself.

The park lock mechanism 130 comprises an engagement member 137 which, when the park lock mechanism 130 is engaged, engages with the second rotational member 132. The engagement member 137 is in a park lock system 101 according to the second aspect connected to the housing connection 138 via the resilient member 140. As such, when the park lock mechanism 130 is engaged, the rotational energy from the second rotational member 138 is at least partially dissipated by the resilient member 140.

The resilient member 140 may in a park lock system 101 according to the second aspect be provided anywhere between the engagement member 137 and the housing connection 138 when the park lock mechanism 130 is engaged. For example, when the park lock mechanism 130 comprises a pawl as an engagement mechanism, and a cone and push rod as park lock actuator 136, the cone may be embodied as the resilient member 140.

Fig. 3B shows part of an even further embodiment of the transmission 100 comprising an intermediate shaft 114 which is rotationally connected to the rotor shaft 110 via the rotor gear 112 and an intermediate gear 116 and rotationally supported in intermediate shaft bearings 115. The intermediate gear 116 in the embodiment of Fig. 3B comprises the second rotational member 132, or may be the second rotational member itself. Mounted on the intermediate shaft 114 may be a further gear 118, arranged to be rotationally connected to a further component of the electric vehicle 10, such as the differential 16.

As an option which may be provided in other embodiments of the transmission 100 as well, in the embodiment of Fig. 3B, the park lock mechanism 130 may be engaged in an axial direction relative to the rotor shaft 110, whereas in other embodiments of the park lock system 101, the park lock mechanism 130 may be engaged in a radial direction relative to the rotor shaft 101, or a tangential direction relative to the rotor shaft 101, or in any other direction. For axial engagement, the second rotational member 132 may be arranged as a crown wheel. The park lock mechanism 130 may also be arranged for engagement in a direction between the axial direction and the radial direction, and in such an embodiment the second rotational member 132 may be arranged as a bevel gear with a angle corresponding to the engagement direction of the park lock mechanism.

When the transmission 100 comprises the intermediate shaft 114, a park lock system 101 according to the second aspect may be used as well, wherein the second rotational member 132 is rotationally connected to the intermediate shaft 114. While in Fig. 3B the resilient member 140 is provided between the intermediate gear 116 and the second rotational member 132, the resilient member 140 may in embodiments of the park lock system 101 also be provided between the second rotational member 132 and one or both of the housing connection 138 or the park lock actuator 136 or another part of the park lock mechanism 130.

Fig. 4A shows part of an embodiment of the transmission 100, focused on the rotor shaft 110 and the first rotation member 131 as a part of the rotor shaft 110 supported in rotor bearing 111. A park lock wheel 132 is provided as second rotational member, and radially provided between the park lock wheel 132 and the rotor shaft 110 is a resilient ring 144 as a resilient member for rotationally connecting the park lock wheel 132 and the rotor shaft 110. The resilient ring 144 may be connected directly to the rotor shaft 110 or via a coupling ring 142.

The resilient ring 144 may comprise vulcanized rubber as a resilient material, any other resilient material or any combination thereof. Dimensions of the resilient ring 144 such as an inner radius, outer radius and/or thickness may be chosen and combined with resilient material options such that the resilient ring 144 provides a preferred rotational stiffness between the rotor shaft 110 and the park lock wheel 132.

Fig. 4B shows part of yet another embodiment of the transmission 100 focused on the rotor shaft 110 and the part of the rotor shaft 131 as the first rotation member supported in rotor bearing 111. The park lock wheel 132 as the second rotational member and as a first of the resilient member and the second rotational member comprises a one or more dowels 135 as axial protrusions. The resilient holed member 140 as a second of the resilient member and the second rotational member 132 comprises a plurality of axial indentations 149 arranged to receive the dowels 135.

In an alternative embodiment, the resilient member 140 comprises the axial protrusions and the second rotational member comprises the indentations arranged to receive the axial protrusions of the resilient member.

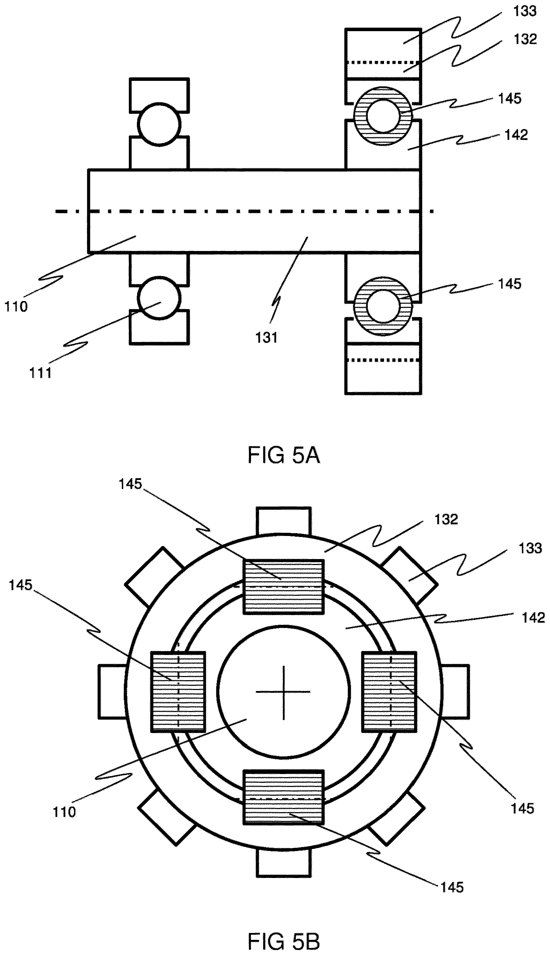

Figs. 5A and 5B respectively show a section view and a front view of part of yet another embodiment of the transmission 100 with the views focused on the rotor shaft 110 and the part of the rotor shaft 131 as the first rotation member supported in rotor bearing 111. In the embodiment of Figs. 5A and 5B, tangentially oriented compression springs 145 are provided as resilient members between the park lock wheel 132 with teeth 133 and the rotor shaft 110. Any number of tangentially oriented compression springs 145 including only one may be provided between the park lock wheel 132 and the rotor shaft 110, for example dependent on the desired rotational stiffness between the park lock wheel 132 and the rotor shaft 110. An intermediate part 142 may optionally be provided to connect the compression springs 145 to the rotor shaft 110.

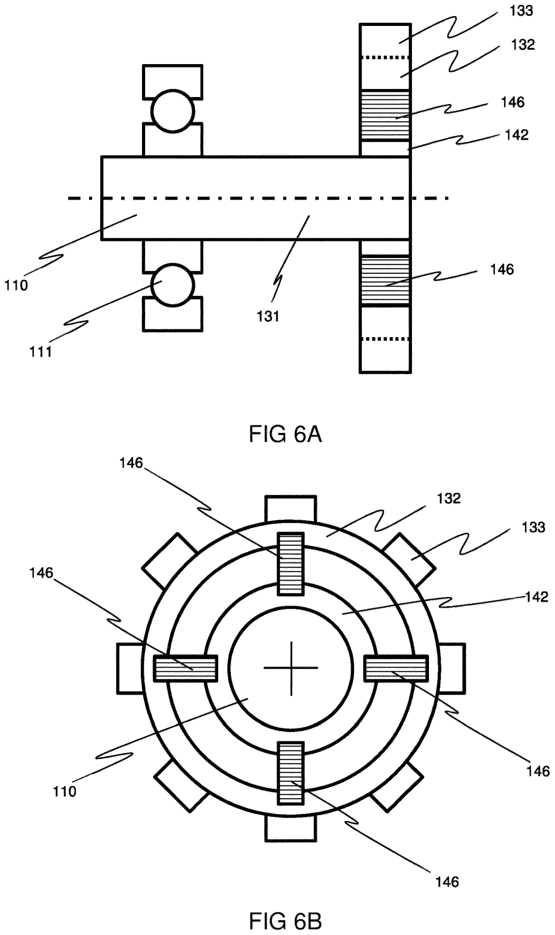

Figs. 6A and 6B respectively show a section view and a front view of a further embodiment of the transmission 100 with the views focused on the rotor shaft 110 and the part of the rotor shaft 131 as the first rotation member supported in rotor bearing 111. In the embodiment of Figs. 6A and 6B, radially oriented leaf springs 146 are provided as resilient members between the park lock wheel 132 with teeth 133 and the rotor shaft 110. Any number of radially oriented leaf springs 146 including only one may be provided between the park lock wheel 132 and the rotor shaft 110, for example dependent on the desired rotational stiffness between the park lock wheel 132 and the rotor shaft 110. An intermediate part 142 may optionally be provided to connect the leaf springs 146 to the rotor shaft 110.

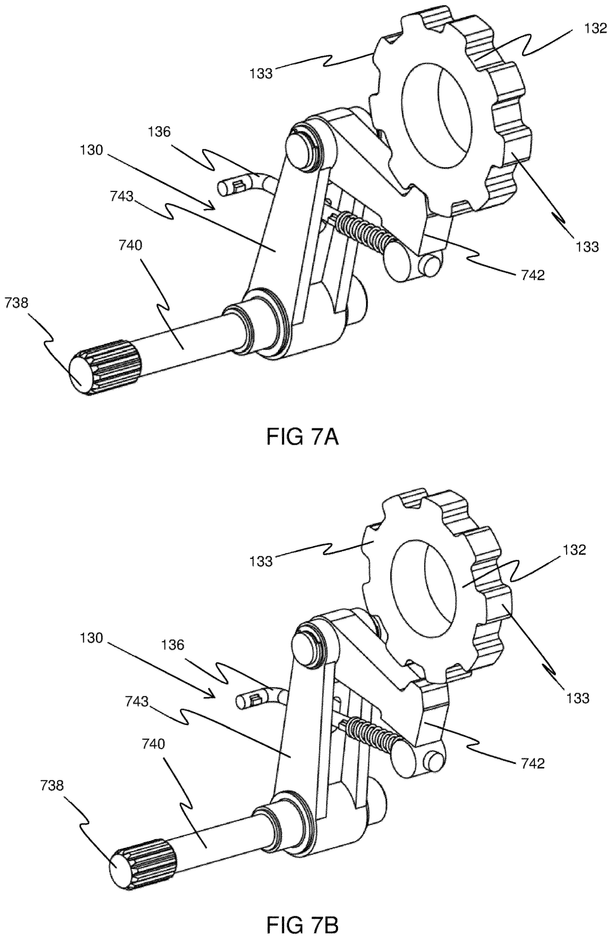

Fig. 7A shows part of an embodiment of the park lock system 100 according to the second aspect, comprising the park lock wheel 132 as the second rotational member. The park lock wheel 132 comprises a plurality of teeth 133, and is, rigidly or resiliently, rotationally connectable to the rotor as the first rotational element, which has been omitted in Fig. 7A for clarity of the figure.

The park lock system 100 comprises a park lock mechanism 130, which comprises a pawl 742 as an engagement element, and a cone and push rod 136 as park lock actuator. The park lock mechanism 130 in Fig. 7A is shown in the engaged setting, wherein the pawl 742 is provided between two teeth 133 of the park lock wheel 132 to prevent rotation of the park lock wheel 132.

In the engaged setting as shown in Fig. 7A, rotation of the park lock wheel 132 is coupled to the transmission housing (not shown) via the pawl 742, a lever 743, a resilient shaft 740 as the resilient member, and a toothed shaft end 738 as the housing connection which is resiliently connectable to the transmission housing.

In the disengaged setting as shown in Fig. 7B, rotation of the park lock wheel 132 is not coupled to the transmission housing, and thus the park lock wheel 132 is free to rotate.

Alternatively or additionally to the resilient shaft 740 being the resilient member, the lever 743 may be arranged as the resilient member. In the embodiment of Fig. 7A, the lever 743 comprises to split lever sections to allow the push rod 136 to extend through the lever sections.

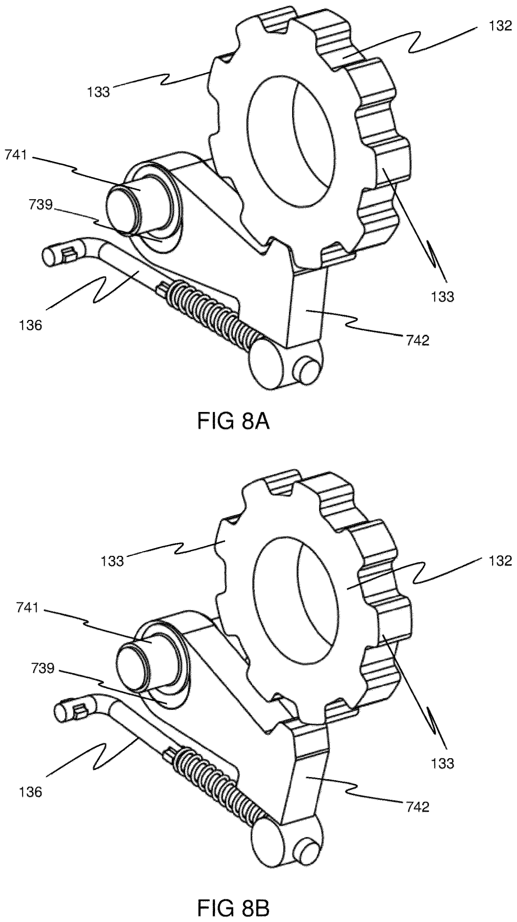

Fig. 8A shows part of yet another embodiment of the park lock system 100 according to the second aspect, comprising the park lock wheel 132 as the second rotational member. The park lock wheel 132 comprises a plurality of teeth 133, and is, rigidly or resiliently, rotationally connectable to the rotor as the first rotational element, which has been omitted in Fig. 7B for conciseness and clarity of the figure.

In the engaged setting as shown in Fig. 8A, the park lock wheel 132 is rotationally connected to the pawl 742, which in turn is connected to an excenter 739. The excenter 739 is to be connected to the housing of the transmission via a spring as the resilient member. The excenter 739 is further rotationally mounted to a bearing 741 as a housing connection.

Fig. 8B shows the embodiment of the park lock system 100 of Fig. 8A, but now in a disengaged setting wherein the rotation of the park lock wheel 132 is not coupled to the transmission housing, and thus the park lock wheel 132 is free to rotate.

As can be seen from the embodiments of Figs. 4A, 4B, 5A, 5B, 6A, 6B, 7A, and 8A, many options are envisioned for providing the resilient connection in the park lock mechanism 101. Any combination of embodiments provided at any location within the transmission or drive line of the electric vehicle as discussed in conjunction with figures 1B, 2A, 2B, 3A, and 3B is envisioned.

Different components in a park lock system may be manufactured as single monolithic parts. Additionally or alternatively may any set of components in a park lock system be fused together, such as the park lock wheel 132 and the rotor shaft 110.

In the description above, it will be understood that when an element such as layer, region or substrate is referred to as being "on" or "onto" another element, the element is either directly on the other element, or intervening elements may also be present. Also, it will be understood that the values given in the description above, are given by way of example and that other values may be possible and/or may be strived for.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

It is to be noted that the figures are only schematic representations of embodiments of the invention that are given by way of non-limiting examples. For the purpose of clarity and a concise description, features are described herein as part of the same or separate embodiments, however, it will be appreciated that the scope of the invention may include embodiments having combinations of all or some of the features described. The word 'comprising' does not exclude the presence of other features or steps than those listed in a claim. Furthermore, the words 'a' and 'an' shall not be construed as limited to 'only one', but instead are used to mean 'at least one', and do not exclude a plurality.

A person skilled in the art will readily appreciate that various parameters and values thereof disclosed in the description may be modified and that various embodiments disclosed and/or claimed may be combined without departing from the scope of the invention, as defined by the appended claims.

It is stipulated that the reference signs in the claims do not limit the scope of the claims, but are merely inserted to enhance the legibility of the claims.

In summary, a park lock system is used in vehicles to provide a coupling between a rotor of an electric motor powering the vehicle to part of the chassis of the vehicle to, in an engaged setting, prevent rolling of the vehicle when the vehicle is parked on a hill. The park lock system may however also be engaged while the vehicle is rolling. In such a case, high loads may occur on parts of the vehicle's powertrain due to sudden deceleration of those parts. To reduce the deceleration after engaging the park lock mechanism, a resilient member is introduced. The resilient member is arranged to resiliently deform and slow the sudden deceleration, decreasing loads on parts of the powertrain due to the deceleration. By virtue of these decreased loads, smaller and/or lighter components may be used in the powertrain which may be advantageous for the size and/or weight of the vehicle.

## Claims

1. A park lock system (101) for an electric vehicle (10), comprising:
- a first rotational member arranged to be rotationally connected to a rotor shaft (110) of an electric motor (12) of the electric vehicle (10);
- a second rotational member;
- a park lock mechanism (130) arranged to substantially prevent, in an engaged setting, a rotation of the second rotational member and allow, in a disengaged setting, a rotation of the second rotational member; and
- a resilient member (140, 148, 740) rotationally connecting the first rotational member and the second rotational member,
wherein a first of the resilient member (140, 740) and the second rotational member comprises a plurality of axial protrusions and a second of the resilient member (140, 740) and the second rotational member comprises a plurality of axial indentations (149) arranged to receive the axial protrusions.

2. The park lock system according to claim 1, comprising a shaft, wherein the first rotational member is connected at a first axial position on the shaft and the second rotational member is connected at a second axial position on the shaft.

3. The park lock system according to claim 2, wherein the shaft comprises the resilient member (140, 740).

4. The park lock system according to claim 2, wherein the second rotational member is rotationally connected to the shaft via the resilient member (140, 740).

5. The park lock system according to any of the preceding claims, wherein the resilient member (140, 740) comprises vulcanized rubber.

6. The park lock system according to any of the preceding claims, wherein the resilient member (140, 740) has a torsional stiffness between 100 Nm/deg and 250 Nm/deg.

7. A park lock system (101) for an electric vehicle (10), comprising:
- a first rotational member arranged to be rotationally connected to a rotor shaft (110) of an electric motor (12) of the electric vehicle (10);
- a second rotational member;
- a park lock mechanism (130) arranged to substantially prevent, in an engaged setting, a rotation of the second rotational member and allow, in a disengaged setting, a rotation of the second rotational member; and
- a resilient member (140) rotationally connecting the first rotational member and the second rotational member,
wherein the resilient member (140) comprises a plurality of compression springs (145) provided substantially tangentially relative to the second rotational member or the resilient member (140) is arranged as a plurality of leaf springs (146) provided substantially radially relative to the second rotational member.

8. A park lock system for an electric vehicle (10), comprising:
- a first rotational member arranged to be rotationally connected to a rotor shaft (110) of an electric motor (12) of the electric vehicle (10);
- a second rotational member rotationally connected to the first rotational member and arranged to be connected to a park lock mechanism (130);
- a park lock mechanism (130) arranged to substantially prevent, in an engaged setting, a rotation of the second rotational member and allow, in a disengaged setting, a rotation of the second rotational member; and
- a resilient member (140) arranged to in the engaged setting couple a force between the second rotational member and a transmission housing (17).

9. A transmission (100) for an electric vehicle (10), comprising:
- a housing fixable to a frame of the electric vehicle (10);
- the park lock system (101) according to any of the preceding claims,
wherein in the engaged setting of the park lock mechanism (130) rotation of the second rotational member is substantially fixed to the housing via the park lock mechanism (130) and in the disengaged setting the second rotational member and the park lock mechanism (130) are not rotationally connected such that the second rotational member may be rotated relative to the housing.

10. Transmission according to claim 9, wherein the second rotational member is arranged as a gear wheel, and the park lock mechanism (130) comprises an engagement member (137) movable between an engaged position and a disengaged position corresponding to the engaged setting and the disengaged setting, wherein in the engaged position the engagement member (137) engages the gear wheel, and in the disengaged position the engagement member (137) does not engage the gear wheel.

11. A powertrain (11) of an electric vehicle (10), comprising:
- a transmission (100) according to claim 9 or 10, and
- an electric motor (12) comprising a rotor (14) comprising a rotor shaft (110), wherein the rotor shaft (110) is rotationally connected to the first rotational member of the park lock system (101) of the transmission (100) such that rotation of the rotor (14) is locked to the housing (17) of the transmission via the resilient member (140) when the park lock mechanism (130) is in the engaged setting.

12. An electric vehicle (10) comprising the powertrain (11) according to claim 11.

## Patentansprüche

1. Parksperrsystem (101) für ein Elektrofahrzeug (10), umfassend:
- ein erstes Drehelement, das angeordnet ist, um drehbar mit einer Rotorwelle (110) eines Elektromotors (12) des Elektrofahrzeugs (10) verbunden zu sein;
- ein zweites Drehelement;
- einen Parksperrmechanismus (130), der angeordnet ist, um in einer eingerasteten Einstellung im Wesentlichen eine Drehung des zweiten Drehelements zu verhindern und in einer ausgerasteten Einstellung eine Drehung des zweiten Drehelements zu ermöglichen; und
- ein elastisches Element (140, 148, 740), welches das erste Drehelement und das zweite Drehelement drehbar verbindet,
wobei ein erstes von dem elastischen Element (140, 740) und dem zweiten Drehelement eine Vielzahl von axialen Vorsprüngen umfasst und ein zweites von dem elastischen Element (140, 740) und dem zweiten Drehelement eine Vielzahl von axialen Vertiefungen (149) umfasst, die angeordnet sind, um die axialen Vorsprünge aufzunehmen.

2. Parksperrsystem nach Anspruch 1, umfassend eine Welle, wobei das erste Drehelement an einer ersten axialen Position auf der Welle verbunden ist und das zweite Drehelement an einer zweiten axialen Position auf der Welle verbunden ist.

3. Parksperrsystem nach Anspruch 2, wobei die Welle das elastische Element (140, 740) umfasst.

4. Parksperrsystem nach Anspruch 2, wobei das zweite Drehelement über das federnde Element (140, 740) drehbar mit der Welle verbunden ist.

5. Parksperrsystem nach einem der vorstehenden Ansprüche, wobei das elastische Element (140, 740) vulkanisiertes Gummi umfasst.

6. Parksperrsystem nach einem der vorstehenden Ansprüche, wobei das elastische Element (140, 740) eine Torsionssteifigkeit zwischen 100 Nm/deg und 250 Nm/deg aufweist.

7. Parksperrsystem (101) für ein Elektrofahrzeug (10), umfassend:
- ein erstes Drehelement, das angeordnet ist, um drehbar mit einer Rotorwelle (110) eines Elektromotors (12) des Elektrofahrzeugs (10) verbunden zu sein;
- ein zweites Drehelement;
- einen Parksperrmechanismus (130), der angeordnet ist, um in einer eingerasteten Einstellung im Wesentlichen eine Drehung des zweiten Drehelements zu verhindern und in einer ausgerasteten Einstellung eine Drehung des zweiten Drehelements zu ermöglichen; und
- ein elastisches Element (140), welches das erste Drehelement und das zweite Drehelement drehbar verbindet,
wobei das elastische Element (140) eine Vielzahl von Druckfedern (145) umfasst, die im Wesentlichen tangential zu dem zweiten Drehelement bereitgestellt sind, oder das elastische Element (140) als eine Vielzahl von Blattfedern (146) angeordnet ist, die im Wesentlichen radial zu dem zweiten Drehelement bereitgestellt sind.

8. Parksperrsystem für ein Elektrofahrzeug (10), umfassend:
- ein erstes Drehelement, das angeordnet ist, um drehbar mit einer Rotorwelle (110) eines Elektromotors (12) des Elektrofahrzeugs (10) verbunden zu sein;
- ein zweites Drehelement, das drehbar mit dem ersten Drehelement verbunden und angeordnet ist, um mit einem Parksperrmechanismus (130) verbunden zu sein;
- einen Parksperrmechanismus (130), der angeordnet ist, um in einer eingerasteten Einstellung im Wesentlichen eine Drehung des zweiten Drehelements zu verhindern und in einer ausgerasteten Einstellung eine Drehung des zweiten Drehelements zu ermöglichen; und
- ein elastisches Element (140), das angeordnet ist, um in der eingerasteten Einstellung eine Kraft zwischen dem zweiten Drehelement und einem Getriebegehäuse (17) zu koppeln.

9. Getriebe (100) für ein Elektrofahrzeug (10), umfassend:
- ein Gehäuse, das an einem Rahmen des Elektrofahrzeugs (10) befestigt werden kann;
- das Parksperrsystem (101) nach einem der vorstehenden Ansprüche,
wobei in der eingerasteten Einstellung des Parksperrmechanismus (130) die Drehung des zweiten Drehelements im Wesentlichen über den Parksperrmechanismus (130) an dem Gehäuse fixiert ist und in der ausgerasteten Einstellung das zweite Drehelement und der Parksperrmechanismus (130) nicht drehbar verbunden sind, sodass das zweite Drehelement relativ zu dem Gehäuse gedreht werden kann.

10. Getriebe nach Anspruch 9, wobei das zweite Drehelement als ein Zahnrad angeordnet ist und der Parksperrmechanismus (130) ein Eingriffselement (137) umfasst, das zwischen einer eingerasteten Position und einer ausgerasteten Position entsprechend der eingerasteten Einstellung und der ausgerasteten Einstellung bewegbar ist, wobei das Eingriffselement (137) in der eingerasteten Position mit dem Zahnrad in Eingriff steht und das Eingriffselement (137) in der ausgerasteten Position nicht mit dem Zahnrad in Eingriff steht.

11. Antriebsstrang (11) eines Elektrofahrzeugs (10), umfassend:
- ein Getriebe (100) nach Anspruch 9 oder 10, und
- einen Elektromotor (12), umfassend einen Rotor (14), der eine Rotorwelle (110) umfasst, wobei die Rotorwelle (110) drehbar mit dem ersten Drehelement des Parksperrsystems (101) des Getriebes (100) verbunden ist, sodass eine Drehung des Rotors (14) mit dem Gehäuse (17) des Getriebes über das elastische Element (140) verriegelt ist, wenn sich der Parksperrmechanismus (130) in der eingerasteten Einstellung befindet.

12. Elektrofahrzeug (10), umfassend den Antriebsstrang (11) nach Anspruch 11.

## Revendications

1. Système de verrouillage de stationnement (101) pour un véhicule électrique (10), comprenant :
un premier élément rotatif agencé pour être connecté de manière rotative à un arbre de rotor (110) d'un moteur électrique (12) du véhicule électrique (10) ;
un second élément rotatif ;
un mécanisme de verrouillage de stationnement (130) agencé pour empêcher sensiblement, dans un réglage en prise, une rotation du second élément rotatif et permettre, dans un réglage hors prise, une rotation du second élément rotatif ; et
un élément élastique (140, 148, 740) reliant de manière rotative le premier élément rotatif et le second élément rotatif,
dans lequel un premier parmi l'élément élastique (140, 740) et le second élément rotatif comprend une pluralité de saillies axiales et un second parmi l'élément élastique (140, 740) et le second élément rotatif comprend une pluralité d'indentations axiales (149) agencées pour recevoir les saillies axiales.

2. Système de verrouillage de stationnement selon la revendication 1, comprenant un arbre, dans lequel le premier élément rotatif est connecté au niveau d'une première position axiale sur l'arbre et le second élément rotatif est connecté au niveau d'une seconde position axiale sur l'arbre.

3. Système de verrouillage de stationnement selon la revendication 2, dans lequel l'arbre comprend l'élément élastique (140, 740).

4. Système de verrouillage de stationnement selon la revendication 2, dans lequel le second élément rotatif est relié à l'arbre de manière rotative via l'élément élastique (140, 740).

5. Système de verrouillage de stationnement selon l'une quelconque des revendications précédentes, dans lequel l'élément élastique (140, 740) comprend du caoutchouc vulcanisé.

6. Système de verrouillage de stationnement selon l'une quelconque des revendications précédentes, dans lequel l'élément élastique (140, 740) présente une rigidité en torsion entre 100 Nm/degré et 250 Nm/degré.

7. Système de verrouillage de stationnement (101) pour un véhicule électrique (10), comprenant :
un premier élément rotatif agencé pour être connecté de manière rotative à un arbre de rotor (110) d'un moteur électrique (12) du véhicule électrique (10) ;
un second élément rotatif ;
un mécanisme de verrouillage de stationnement (130) agencé pour empêcher sensiblement, dans un réglage en prise, une rotation du second élément rotatif et permettre, dans un réglage hors prise, une rotation du second élément rotatif ; et
un élément élastique (140) reliant de manière rotative le premier élément rotatif et le second élément rotatif,
dans lequel l'élément élastique (140) comprend une pluralité de ressorts de compression (145) fournis de manière sensiblement tangentielle par rapport au second élément rotatif, ou l'élément élastique (140) est agencé sous la forme d'une pluralité de ressorts à lame (146) fournis de manière sensiblement radiale par rapport au second élément rotatif.

8. Système de verrouillage de stationnement pour un véhicule électrique (10), comprenant :
un premier élément rotatif agencé pour être connecté de manière rotative à un arbre de rotor (110) d'un moteur électrique (12) du véhicule électrique (10) ;
un second élément rotatif relié de manière rotative au premier élément rotatif et agencé pour être relié à un mécanisme de verrouillage de stationnement (130) ;
un mécanisme de verrouillage de stationnement (130) agencé pour empêcher sensiblement, dans un réglage en prise, une rotation du second élément rotatif et permettre, dans un réglage hors prise, une rotation du second élément rotatif ; et
un élément élastique (140) agencé pour coupler, dans le réglage en prise, une force entre le second élément rotatif et un boîtier de transmission (17).

9. Transmission (100) pour un véhicule électrique (10), comprenant :
un boîtier pouvant être fixé à un châssis du véhicule électrique (10) ;
le système de verrouillage de stationnement (101) selon l'une quelconque des revendications précédentes,
dans laquelle, dans le réglage en prise du mécanisme de verrouillage de stationnement (130), une rotation du second élément rotatif est sensiblement fixée au boîtier via le mécanisme de verrouillage de stationnement (130), et dans le réglage hors prise, le second élément rotatif et le mécanisme de verrouillage de stationnement (130) ne sont pas reliés de manière rotative de sorte que le second élément rotatif peut être tourné par rapport au boîtier.

10. Transmission selon la revendication 9, dans laquelle le second élément rotatif est agencé sous la forme d'une roue dentée, et le mécanisme de verrouillage de stationnement (130) comprend un élément de mise en prise (137) mobile entre une position en prise et une position hors prise correspondant au réglage en prise et au réglage hors prise, dans laquelle dans la position en prise, l'élément de mise en prise (137) vient en prise avec la roue dentée, et dans la position hors prise, l'élément hors prise (137) ne vient pas en prise avec la roue dentée.

11. Groupe motopropulseur (11) d'un véhicule électrique (10), comprenant :
une transmission (100) selon la revendication 9 ou 10, et
un moteur électrique (12) comprenant un rotor (14) comprenant un arbre de rotor (110), dans lequel l'arbre de rotor (110) est connecté de manière rotative au premier élément rotatif du système de verrouillage de stationnement (101) de la transmission (100) de telle sorte qu'une rotation du rotor (14) est verrouillée au boîtier (17) de la transmission via l'élément élastique (140) lorsque le mécanisme de verrouillage de stationnement (130) est dans le réglage en prise.

12. Véhicule électrique (10) comprenant le groupe motopropulseur (11) selon la revendication 11.
